# EUROPEAN PATENT APPLICATION

(11) **EP 4 825 706 A1**
(43) Date of publication of application: **21.10.2026**
(21) Application number: 26168113.4
(22) Date of filing: 26.03.2026
(51) Int. Cl.: B62D 25/08, B62D 21/15

(54) **VEHICLE FRONT PORTION STRUCTURE**

(30) Priority: 18.04.2025 JP 2025068828
(71) Applicant: Toyota Jidosha Kabushiki Kaisha, Toyota-shi, Aichi-ken 471-8571 (JP)
(72) Inventor: IKUHARA, Naoki, TOYOTA-SHI, AICHI-KEN, 471-8571 (JP); KAWASHIMA, Mutsumi, TOYOTA-SHI, AICHI-KEN, 471-8571 (JP)
(74) Representative: Cabinet Beau de Loménie

(57) **Abstract**

A vehicle front portion structure includes a front portion framework (10) that is integrally molded, the front portion framework (10) including a front side member portion (13) extending along a vehicle front-rear direction and an apron member portion (14) provided above the front side member portion (13) in a vehicle-height direction; a crash box (20) provided forward of the front side member portion (13) in the vehicle front-rear direction; a bumper reinforcement (30) connected to a front end of the crash box (20), the bumper reinforcement (30) extending in a vehicle width direction; and a connecting member (40) that connects the apron member portion (14) and the crash box (20).

## Description

### BACKGROUND OF THE INVENTION

### 1. Field of the Invention

The present disclosure relates to a vehicle front portion structure.

### 2. Description of Related Art

Japanese Unexamined Patent Application Publication No. 7-149261 (JP 7-149261 A) discloses a vehicle front portion structure including a pair of front side members, a wheel well and a suspension tower provided above each of the front side members on a vehicle body outer side, and an apron upper member provided to couple top portions of the wheel well and the suspension tower, the apron upper member being disposed substantially parallel with each of the front side members.

### SUMMARY OF THE INVENTION

In the vehicle front portion structure, the front side member and the apron member may be integrally molded. Such an integrally molded product (hereinafter, referred to as "front portion framework") may be required to be entirely removed from a vehicle at the time of repair even in a case of partial damage. Accordingly, there has been a possibility that the repair becomes complicated. Thus, it has been desired to reduce damage of the front portion framework.

The present disclosure has been made in consideration of the above-mentioned fact, and provides a vehicle front portion structure that makes it possible to reduce damage of the front portion framework.

A first aspect of the present disclosure relates to a vehicle front portion structure including a front portion framework, a crash box, a bumper reinforcement, and a connecting member. The front portion framework is integrally molded, including a front side member portion extending along a vehicle front-rear direction and an apron member portion provided above the front side member portion in a vehicle-height direction. The crash box is provided forward of the front side member portion in the vehicle front-rear direction. The bumper reinforcement is connected to a front end of the crash box, the bumper reinforcement extending in a vehicle width direction. The connecting member connects the apron member portion and the crash box.

For example, when a collision body collides (in particular, performs small overlap collision) with the vehicle from the front side, a load may be input to the vehicle from the front side. In this case, a load is input to the bumper reinforcement and the crash box. The vehicle front portion structure according to the first aspect includes the connecting member that connects the apron upper member portion and the crash box. This makes it possible for the connecting member to receive a part of the load input to the bumper reinforcement and the crash box when the load is input to the vehicle from the front side. Thus, the support rigidity of the crash box and the bumper reinforcement can be improved. As a result, a situation in which the crash box falls so as to be inclined with respect to the vehicle front-rear direction and a situation in which the bumper reinforcement falls so as to be inclined with respect to the vehicle width direction can be prevented. As a result, the shock absorption function of the crash box and the bumper reinforcement can be suitably exerted, and hence the load to be transmitted to the front portion framework can be reduced. This makes it possible to reduce damage of the front portion framework for which repair is complicated.

In the vehicle front portion structure according to a second aspect of the present disclosure, in the first aspect, the crash box may include a first energy absorption portion extending from the front side member portion to a vehicle front side, and a second energy absorption portion provided forward of the first energy absorption portion in the vehicle front-rear direction, the second energy absorption portion being lower in strength than the first energy absorption portion. The connecting member may be connected to the first energy absorption portion.

In the vehicle front portion structure according to the second aspect, the second energy absorption portion is provided forward of the first energy absorption portion in the vehicle front-rear direction and is lower in strength than the first energy absorption portion. Accordingly, when a load is input to the vehicle from the front side, the second energy absorption portion is deformed earlier than the first energy absorption portion to absorb the load. This prevents a large load from being input to the connecting member connected to the first energy absorption portion in the case of a load in a level that does not deform the first energy absorption portion but deforms the second energy absorption portion. Thus, the load to be input to the connecting member is reduced. As a result, the load to be transmitted to the front portion framework via the connecting member can also be reduced. This makes it possible to reduce damage of the front portion framework for which repair is complicated.

In the vehicle front portion structure according to a third aspect of the present disclosure, in the second aspect, the connecting member may be connected to an outer surface of the first energy absorption portion in the vehicle width direction.

In the vehicle front portion structure according to the third aspect, the connecting member is connected to the outer surface of the first energy absorption portion. This makes it possible to improve the support rigidity of the crash box and the bumper reinforcement in the vehicle width direction. As a result, the crash box and the bumper reinforcement can be more suitably prevented from falling sideways. The phrase "falling sideways" means falling so as to be inclined with respect to the vehicle front-rear direction or the vehicle width direction.

In the vehicle front portion structure according to a fourth aspect of the present disclosure, in the second aspect, the connecting member may be connected to an upper surface of the first energy absorption portion.

In the vehicle front portion structure according to the fourth aspect, the connecting member is connected to the upper surface of the first energy absorption portion. This makes it possible to improve the support rigidity of the crash box and the bumper reinforcement in the vehicle-height direction. As a result, the crash box and the bumper reinforcement can be more suitably prevented from falling vertically. The phrase "falling vertically" means falling so as to be inclined with respect to the horizontal plane.

In the vehicle front portion structure according to a fifth aspect of the present disclosure, in the first aspect, the crash box may include a first energy absorption portion extending from the front side member portion to a vehicle front side, and a second energy absorption portion provided outward of the first energy absorption portion in the vehicle width direction. The connecting member may be connected to the second energy absorption portion.

In the vehicle front portion structure according to the fifth aspect, the connecting member is connected to the second energy absorption portion of the crash box. This makes it possible to bring the position of a connection part between the connecting member and the second energy absorption portion in the vehicle width direction greatly outward of the front side member portion in the vehicle width direction by, for example, adjusting the length of the second energy absorption portion such that the length in the vehicle width direction is increased. Thus, for example, it is possible for the connecting member to suitably receive a collision load even in a vehicle having a long length in the vehicle width direction.

In the vehicle front portion structure according to a sixth aspect of the present disclosure, in the fifth aspect, the second energy absorption portion may be connected to an outer surface of a front end portion of the first energy absorption portion in the vehicle width direction.

In the vehicle front portion structure according to the sixth aspect, the second energy absorption portion is connected to the outer surface of the front end portion of the first energy absorption portion in the vehicle width direction. This makes it possible to bring the position of the second energy absorption portion to the front side in the vehicle front-rear direction. Thus, it is possible to increase the length of the connecting member connected to the second energy absorption portion. As a result, energy to be absorbed by the connecting member can be increased.

In the vehicle front portion structure according to a seventh aspect of the present disclosure, in any one of the first aspect to the sixth aspect, a connection part between the crash box and the connecting member may be lower in connection strength than a connection part between the apron member portion and the connecting member.

In the vehicle front portion structure according to the seventh aspect, the connection part between the crash box and the connecting member is lower in connection strength than the connection part between the apron member portion and the connecting member. This allows the second energy absorption portion and the connecting member to be easily disconnected when a load is input to the connecting member. Thus, it is possible to reduce a load to be transmitted from the connecting member to the front portion framework (the apron member portion). As a result, it is possible to reduce damage of the front portion framework.

In the vehicle front portion structure according to an eighth aspect of the present disclosure, in any one of the first aspect to the seventh aspect, the connecting member may include a bending portion that is easily bent in an intersecting direction that is a direction intersecting with the vehicle front-rear direction.

In the vehicle front portion structure according to the eighth aspect, the connecting member includes the bending portion that is easily bent in the intersecting direction. This makes it possible to reduce a load to be transmitted to the front portion framework by bending the connecting member in the intersecting direction from the bending portion serving as a start point when the load is input to the connecting member. As a result, it is possible to reduce damage of the front portion framework.

As described above, the vehicle front portion structure according to the present disclosure has an excellent effect of being capable of reducing the damage of the front portion framework.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating a vehicle front portion structure according to a first embodiment of the present disclosure;
FIG. 2 is a plan view illustrating the vehicle front portion structure according to the first embodiment of the present disclosure;
FIG. 3 is a plan view illustrating a vehicle front portion structure according to a modification example of the first embodiment of the present disclosure;
FIG. 4 is a perspective view illustrating a vehicle front portion structure according to a second embodiment of the present disclosure;
FIG. 5 is a plan view illustrating the vehicle front portion structure according to the second embodiment of the present disclosure; and
FIG. 6 is a plan view illustrating a vehicle front portion structure according to a modification example of the second embodiment of the present disclosure.

### DETAILED DESCRIPTION OF EMBODIMENTS

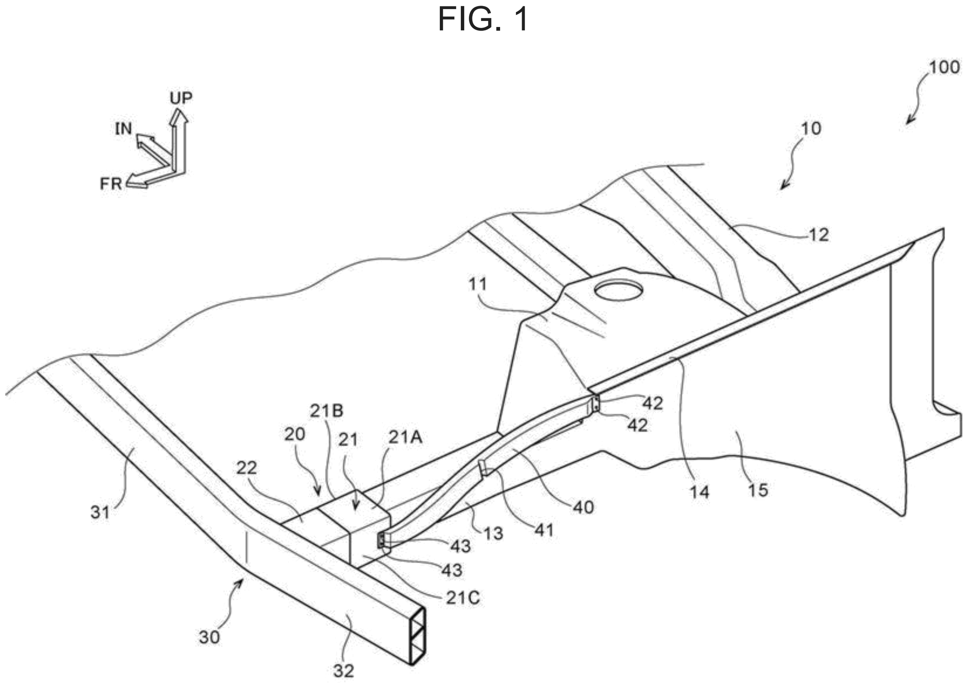

Hereinafter, embodiments of a vehicle front portion structure according to the present disclosure are described with reference to FIG. 1 to FIG. 6. It is to be noted that the arrow FR indicated as appropriate in each figure indicates vehicle forward corresponding to a front side in a vehicle front-rear direction, the arrow IN indicates an inner direction in a vehicle width direction, and the arrow UP indicates vehicle upward corresponding to an upper side in a vehicle-height direction. When there are simple phrases of "front-rear direction", "width direction", and "height direction" in the description below, the phrases respectively indicate the vehicle front-rear direction, the vehicle width direction, and the vehicle-height direction. Further, a right-left direction means a right-left direction in a state in which the vehicle faces forward in the vehicle front-rear direction.

### First Embodiment

A vehicle front portion structure according to a first embodiment of the present disclosure is described with reference to FIG. 1 to FIG. 3. The vehicle front portion structure according to the present embodiment is applied to a vehicle 100.

### Vehicle

The vehicle 100 is, for example, a battery-type electric vehicle (BEV: Battery Electric Vehicle). It is to be noted that the vehicle to which the vehicle front portion structure according to the present embodiment is applicable is not limited to the BEV. For example, the vehicle front portion structure according to the present embodiment may be applied to a fuel cell electric vehicle, a vehicle to be driven by an internal combustion engine, or the like.

### Vehicle Front Portion Structure

The vehicle front portion structure according to the present embodiment is provided in a front portion of the vehicle 100. It is to be noted that the vehicle front portion structure is configured to be bilaterally symmetrical with reference to a vertical plane at the middle in the vehicle width direction. Thus, in the following, the vehicle left side of the vehicle front portion structure is mainly described, and description for the vehicle right side is omitted as appropriate.

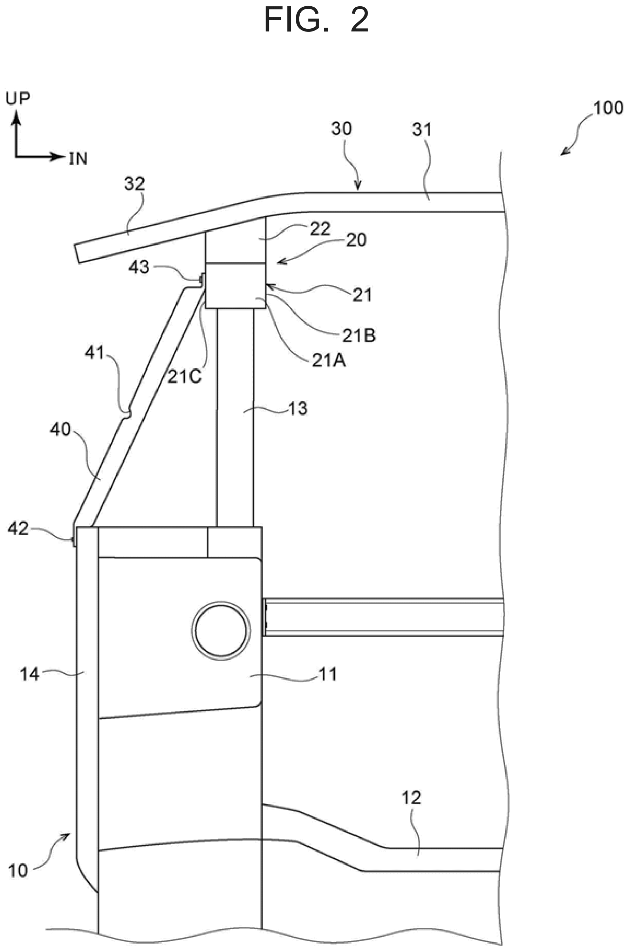

As illustrated in FIG. 1 and FIG. 2, the vehicle front portion structure includes a front portion framework 10, a crash box 20 that extends from a front end portion of the front portion framework 10 to the front side, a bumper reinforcement 30 that is connected to a front end of the crash box 20 and extends in the vehicle width direction, and an outrigger (connecting member) 40 that connects the front portion framework 10 and the crash box 20.

### Front Portion Framework 10

The front portion framework 10 constitutes a front portion of the vehicle 100. The front portion framework 10 is a member that becomes a framework of the front portion of the vehicle 100. The front portion framework 10 is integrally molded by casting. Specifically, the front portion framework 10 may be, for example, an aluminum die-cast integrally molded product.

The front portion framework 10 includes a pair of right and left front wheel well portions 11, a crossmember portion 12 that connects rear portions of the right and left front wheel well portions 11, a pair of right and left front side member portions 13 provided below the respective front wheel well portions 11, a pair of right and left apron member portions 14 provided above the respective front side member portions 13, and an upper member portion 15 provided outward of each of the front wheel well portions 11 in the vehicle width direction. The front wheel well portions 11, the crossmember portion 12, the front side member portions 13, the apron member portions 14, and the upper member portions 15 are integrally molded by casting.

The front wheel well portion 11 forms a space in which a front wheel (not shown) is accommodated. The crossmember portion 12 extends in the vehicle width direction. The crossmember portion 12 connects the front wheel well portions 11 separated in the vehicle width direction.

The front side member portion 13 extends linearly along the vehicle front-rear direction. A rear portion of the front side member portion 13 in the vehicle front-rear direction is provided below the front wheel well portion 11. A front portion of the front side member portion 13 in the vehicle front-rear direction is positioned forward of the front wheel well portion 11 in the vehicle front-rear direction. A rear end portion of the crash box 20 is connected to a front end portion of the front side member portion 13 in the vehicle front-rear direction.

The apron member portion 14 is provided above the front side member portion 13 in the vehicle-height direction and outward of the front side member portion 13 in the vehicle width direction. The apron member portion 14 extends along the front-rear direction. The apron member portion 14 is provided above the upper member portion 15 in the vehicle-height direction. A rear end portion of the outrigger 40 is connected to a front end portion of the apron member portion 14 in the vehicle front-rear direction.

The upper member portion 15 is provided below the apron member portion 14. The upper member portion 15 extends in the vehicle-height direction and the vehicle front-rear direction.

### Crash Box 20

The crash box 20 extends linearly in the vehicle front-rear direction. The crash box 20 extends from the front side member portion 13 of the front portion framework 10 to the front side in the vehicle front-rear direction. That is, the rear end portion of the crash box 20 is connected to the front end portion of the front side member portion 13 of the front portion framework 10. Further, a front end portion of the crash box 20 is connected to a rear surface of the bumper reinforcement 30. The crash box 20 is deformed to absorb a load input to the vehicle 100.

The crash box 20 includes a first energy absorption portion 21 extending from the front side member portion 13 to the vehicle front side, and a second energy absorption portion 22 provided forward of the first energy absorption portion 21 in the vehicle front-rear direction.

The first energy absorption portion 21 extends linearly along the vehicle front-rear direction. A rear end portion of the first energy absorption portion 21 is connected to the front end portion of the front side member portion 13. Further, a front end portion of the first energy absorption portion 21 is connected to a rear end portion of the second energy absorption portion 22.

The first energy absorption portion 21 is higher in strength than the second energy absorption portion 22. That is, the first energy absorption portion 21 is less liable to be deformed than the second energy absorption portion 22.

The first energy absorption portion 21 is a member having a rectangular tube shape. The first energy absorption portion 21 includes an upper surface 21A that is a flat surface, an inner side surface 21B that may bend from an inner end of the upper surface 21A in the vehicle width direction to extend downward, an outer side surface 21C that may bend from an outer end of the upper surface 21A in the vehicle width direction to extend downward, and a lower surface (not shown) that connects a lower end of the inner side surface 21B and a lower end of the outer side surface 21C to each other. A front end portion of the outrigger 40 is connected to the outer side surface 21C. In detail, the front end portion of the outrigger 40 is connected to a rear portion of the outer side surface 21C.

The second energy absorption portion 22 is a member having a rectangular tube shape, and linearly extends along the vehicle front-rear direction. The rear end portion of the second energy absorption portion 22 is connected to the front end portion of the first energy absorption portion 21. Further, a front end portion of the second energy absorption portion 22 is connected to the rear surface of the bumper reinforcement 30. In detail, the front end portion of the second energy absorption portion 22 is connected to a rear surface of an inclined portion 32 provided at an end portion of the bumper reinforcement 30 in the vehicle width direction. Accordingly, as illustrated in FIG. 2, the front end portion of the second energy absorption portion 22 is inclined to be positioned rearward as extending outward in the vehicle width direction.

The second energy absorption portion 22 is lower in strength than the first energy absorption portion 21. That is, the second energy absorption portion 22 is more easily deformed than the first energy absorption portion 21.

In the present embodiment, the length of the first energy absorption portion 21 in the vehicle width direction and the length of the second energy absorption portion 22 in the vehicle width direction are the same. Further, the length of the first energy absorption portion 21 in the vehicle-height direction and the length of the second energy absorption portion 22 in the vehicle-height direction are the same.

It is to be noted that a method of reducing the strength of the second energy absorption portion 22 to be lower than the strength of the first energy absorption portion 21 is not particularly limited. As in the present embodiment, when the outer shape of the first energy absorption portion 21 and the outer shape of the second energy absorption portion 22 are the same, the plate thickness of the second energy absorption portion 22 may be set to be thinner than the plate thickness of the first energy absorption portion 21 such that the strength of the second energy absorption portion 22 becomes lower than the strength of the first energy absorption portion 21. Further, the second energy absorption portion 22 and the first energy absorption portion 21 may be made of different materials such that the strength of the second energy absorption portion 22 becomes lower than the strength of the first energy absorption portion 21. Further, an easily deformable weak portion may be provided to the second energy absorption portion 22 such that the strength of the second energy absorption portion 22 becomes lower than the strength of the first energy absorption portion 21.

Further, the first energy absorption portion 21 and the second energy absorption portion 22 may be formed to have different outer shapes such that the strength of the second energy absorption portion 22 becomes lower than the strength of the first energy absorption portion 21. For example, the length of the second energy absorption portion 22 in the vehicle width direction or the vehicle-height direction may be set to be shorter than the length of the first energy absorption portion 21 in the vehicle width direction or the vehicle-height direction such that the strength of the second energy absorption portion 22 becomes lower than the strength of the first energy absorption portion 21.

### Bumper Reinforcement 30

The bumper reinforcement 30 is provided at the front end portion of the vehicle 100. The bumper reinforcement 30 integrally includes a middle portion 31 provided at the middle in the vehicle width direction, and inclined portions 32 provided at both end portions in the vehicle width direction.

The middle portion 31 extends linearly along the vehicle width direction. The inclined portions 32 are connected to both end portions of the middle portion 31 in the vehicle width direction.

The inclined portion 32 extends from an end portion of the middle portion 31 in the vehicle width direction outward in the vehicle width direction and rearward in the vehicle front-rear direction. That is, the inclined portion 32 is provided to be inclined with respect to the vehicle width direction in plan view. The front end portion of the crash box 20 (in detail, the second energy absorption portion 22) is connected to the rear surface of the inclined portion 32.

### Outrigger 40

The outrigger 40 is provided above the front side member portion 13 of the front portion framework 10. The outrigger 40 is provided outward of the front side member portion 13 of the front portion framework 10 in the vehicle width direction.

The outrigger 40 connects the front portion framework 10 and the crash box 20. In detail, the outrigger 40 connects the front end portion of the apron member portion 14 of the front portion framework 10 and the outer side surface 21C of the first energy absorption portion 21 of the crash box 20. A rear end portion of the outrigger 40 is connected to a front end portion of the apron member portion 14 of the front portion framework 10. A front end portion of the outrigger 40 is connected to the outer side surface 21C of the first energy absorption portion 21 of the crash box 20.

As illustrated in FIG. 2, the first energy absorption portion 21 is provided forward of the apron member portion 14 in the vehicle front-rear direction and inward of the apron member portion 14 in the vehicle width direction. Accordingly, the outrigger 40 extends forward and inward from the apron member portion 14. Further, the first energy absorption portion 21 is positioned below the apron member portion 14. Accordingly, the outrigger 40 extends downward from the apron member portion 14.

As illustrated in FIG. 1 and FIG. 2, the outrigger 40 is an elongated member extending substantially linear. The outrigger 40 includes a recessed portion (a bending portion) 41 recessed inward from its outer side surface in the vehicle width direction. The recessed portion 41 is provided at a substantially middle portion in the vehicle front-rear direction. The recessed portion 41 is shorter in length in the vehicle width direction (in other words, thickness) than other parts of the outrigger 40. Accordingly, the recessed portion 41 is easily deformed in the vehicle width direction (an intersecting direction). In detail, the recessed portion 41 is easily bent in an inner direction in the vehicle width direction. With the recessed portion 41 being provided, the outrigger 40 is easily bent in the inner direction in the vehicle width direction.

As described above, the rear end portion of the outrigger 40 is connected to the apron member portion 14, and the front end portion of the outrigger 40 is connected to the first energy absorption portion 21. In the present embodiment, the rear end portion of the outrigger 40 is fastened and fixed to the apron member portion 14 by a plurality of (in the present embodiment, as an example, two) fastening tools 42. Further, the front end portion of the outrigger 40 is fastened and fixed to the first energy absorption portion 21 by a plurality of (in the present embodiment, as an example, two) fastening tools 43.

A connection part between the outrigger 40 and the apron member portion 14 has a structure in which a connection portion on the apron member portion 14 side is less liable to be deformed than a connection portion on the outrigger 40 side. In other words, the connection portion on the outrigger 40 side is more easily deformed than the connection portion on the apron member portion 14 side. A method of forming the connection portion on the outrigger 40 side to be easily deformed is not particularly limited, but, for example, a cutout may be formed at an outer edge of the connection portion on the outrigger 40 side (in detail, a part to which the fastening tools 42 are fixed) such that the connection portion on the outrigger 40 side is easily deformed. Further, the connection portion on the outrigger 40 side may be formed to be easily deformed by reducing the thickness of the connection portion on the outrigger 40 side.

In the present embodiment, the connection strength of a connection part between the outrigger 40 and the first energy absorption portion 21 is lower than the connection strength of the connection part between the outrigger 40 and the apron member portion 14. That is, the connection part between the outrigger 40 and the first energy absorption portion 21 is more easily disconnected than the connection part between the outrigger 40 and the apron member portion 14.

It is to be noted that a method of changing the connection strength is not particularly limited, but, for example, the number of fastening tools may be changed. That is, the connection strength may be reduced by reducing the number of fastening tools 43 that connect the outrigger 40 and the first energy absorption portion 21 so as to be lower than the number of fastening tools 42 that connect the outrigger 40 and the apron member portion 14.

### Actions and Effects

According to the present embodiment, the following actions and effects are provided.

For example, when, for example, a collision body collides (in particular, performs small overlap collision) with the vehicle 100 from the front side, a load may be input to the vehicle 100 from the front side. In this case, a load is input to the bumper reinforcement 30 and the crash box 20. In the present embodiment, the outrigger 40 that connects the apron member portion 14 and the crash box 20 is included. This makes it possible for the outrigger 40 to receive a part of the load input to the bumper reinforcement 30 and the crash box 20 when the load is input to the vehicle 100 from the front side. Thus, the support rigidity of the crash box 20 and the bumper reinforcement 30 can be improved. As a result, a situation in which the crash box 20 falls so as to be inclined with respect to the vehicle front-rear direction and a situation in which the bumper reinforcement 30 falls so as to be inclined with respect to the vehicle width direction can be prevented. As a result, the shock absorption function of the crash box 20 and the bumper reinforcement 30 can be suitably exerted, and hence the load to be transmitted to the front portion framework 10 can be reduced. This makes it possible to reduce damage of the front portion framework 10 for which repair is complicated.

Further, the load to be transmitted to the front portion framework 10 can be reduced, and hence a load to be transmitted to a vehicle cabin provided rearward of the front portion framework 10 in the vehicle front-rear direction can also be reduced. Thus, safety of an occupant boarding the vehicle cabin can be improved.

Further, in the present embodiment, the second energy absorption portion 22 is provided forward of the first energy absorption portion 21 in the vehicle front-rear direction and has a low strength. Accordingly, when a load is input to the vehicle 100 from the front side, the second energy absorption portion 22 is deformed earlier than the first energy absorption portion 21 to absorb the load. This prevents a large load from being input to the outrigger 40 connected to the first energy absorption portion 21 in the case of a load in a level that does not deform the first energy absorption portion 21 but deforms the second energy absorption portion 22. Thus, the load to be input to the outrigger 40 is reduced. As a result, the load to be transmitted to the front portion framework 10 via the outrigger 40 can also be reduced. This makes it possible to reduce damage of the front portion framework 10 for which repair is complicated.

Further, in the present embodiment, the outrigger 40 is connected to the outer side surface 21C of the first energy absorption portion 21. This makes it possible to improve the support rigidity of the crash box 20 and the bumper reinforcement 30 in the vehicle width direction. As a result, the crash box 20 and the bumper reinforcement 30 can be more suitably prevented from falling sideways. It is to be noted that the phrase "falling sideways" means falling of the crash box 20 or the like so as to be inclined with respect to the vehicle front-rear direction or the vehicle width direction.

Further, in the present embodiment, the connection part between the crash box 20 and the outrigger 40 is lower in connection strength than the connection part between the apron member portion 14 and the outrigger 40. This allows the second energy absorption portion 22 and the outrigger 40 to be easily disconnected when a load is input to the outrigger 40. Thus, it is possible to reduce a load to be transmitted from the outrigger 40 to the front portion framework 10 (the apron member portion 14). As a result, it is possible to reduce damage of the front portion framework 10.

It is to be noted that, even when the crash box 20 and the outrigger 40 are disconnected, the outrigger 40 itself may be pushed rearward such that a load acts on the connection part between the outrigger 40 and the apron member portion 14. Meanwhile, in the present embodiment, the connection part between the outrigger 40 and the apron member portion 14 has a structure in which the connection portion on the outrigger 40 side is more easily deformed than the connection portion on the apron member portion 14 side. This allows the outrigger 40 side to be deformed even when a load acts on the connection part between the outrigger 40 and the apron member portion 14, and thus the outrigger 40 and the apron member portion 14 are easily disconnected. Thus, it is possible to reduce damage of the apron member portion 14 (the front portion framework 10).

Further, in the present embodiment, the outrigger 40 includes the recessed portion 41 that is easily bent in the intersecting direction. This makes it possible to reduce a load to be transmitted to the front portion framework 10 by bending the outrigger 40 inward in the vehicle width direction from the recessed portion 41 serving as a start point when the load is input to the outrigger 40. As a result, it is possible to reduce damage of the front portion framework 10.

### Modification Example

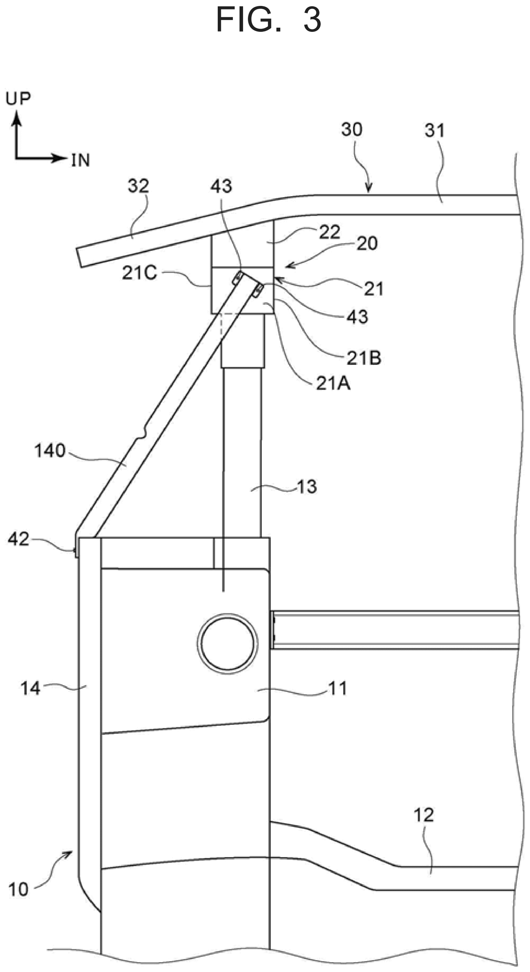

It is to be noted that, in the above-mentioned first embodiment, an example in which the front end portion of the outrigger 40 is connected to the outer side surface 21C of the first energy absorption portion 21 has been described, but the present disclosure is not limited thereto. For example, as illustrated in FIG. 3, a front end portion of an outrigger 140 may be connected to the upper surface 21A of the first energy absorption portion 21.

As described above, with the outrigger 140 being connected to the upper surface 21A of the first energy absorption portion 21, it is possible to improve the support rigidity of the crash box 20 and the bumper reinforcement 30 in the vehicle-height direction. It is thus possible to more suitably prevent the crash box 20 and the bumper reinforcement 30 from falling vertically. The phrase "falling vertically" means falling of the crash box 20 or the like so as to be inclined with respect to the horizontal plane.

### Second Embodiment

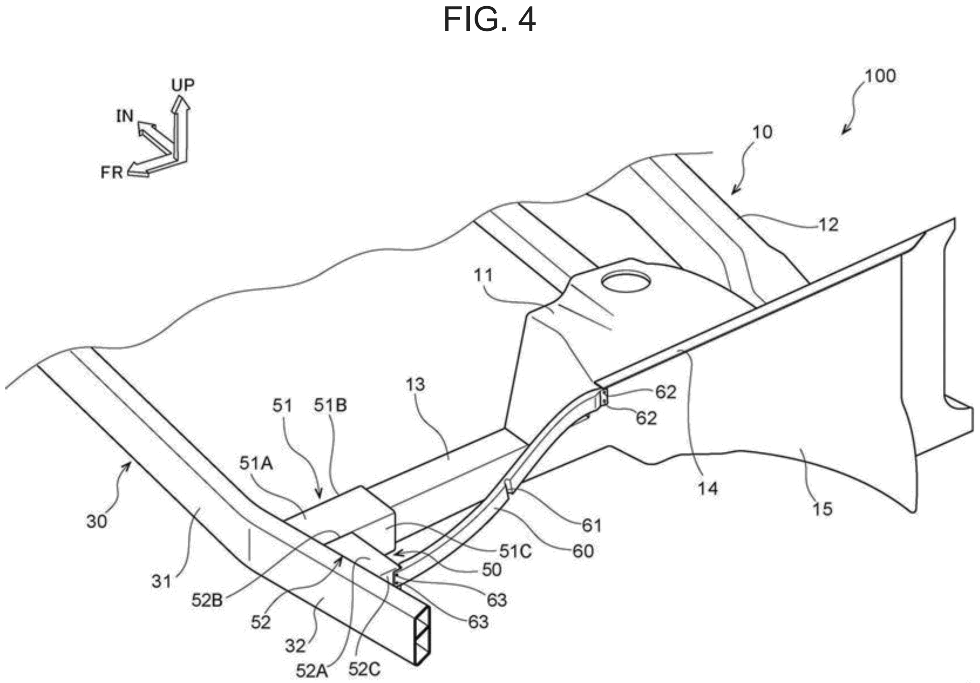

Next, a vehicle front portion structure according to a second embodiment of the present disclosure is described with reference to FIG. 4 to FIG. 7. The vehicle front portion structure according to the present embodiment is different from the above-mentioned first embodiment in the structure of the crash box and the connection destination of the outrigger. Other points are similar to those of the above-mentioned first embodiment, and hence detailed description thereof is omitted by denoting similar configurations with the same reference symbols.

### Crash Box 50

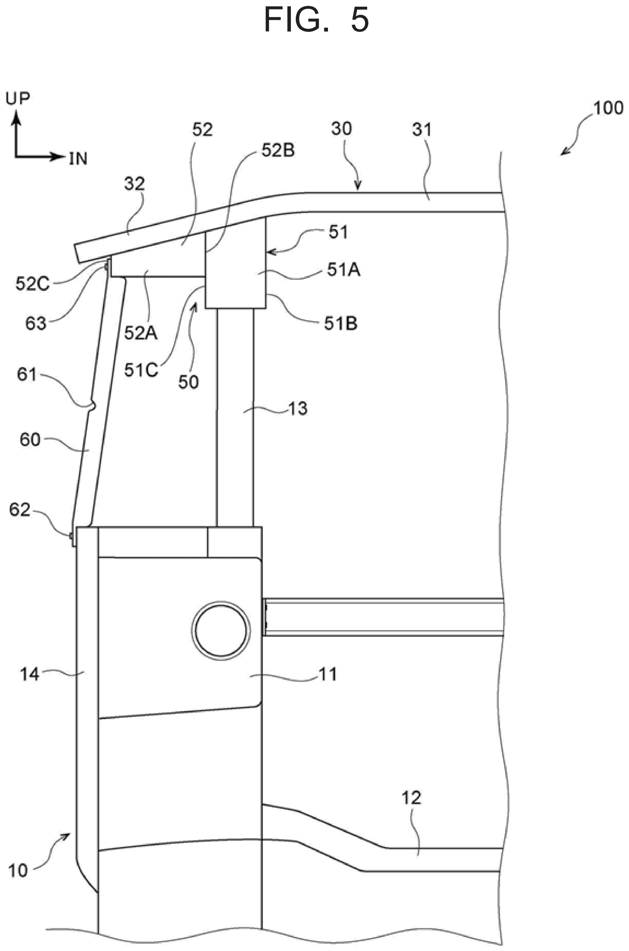

As illustrated in FIG. 4 and FIG. 5, a crash box 50 according to the present embodiment includes a first energy absorption portion 51 extending from the front side member portion 13 of the front portion framework 10 to the vehicle front side, and a second energy absorption portion 52 connected to an outer side surface 51C of the first energy absorption portion 51 in the vehicle width direction. It is to be noted that, in the present embodiment, an example in which separate members are connected as the first energy absorption portion 51 and the second energy absorption portion 52 is described, but the first energy absorption portion 51 and the second energy absorption portion 52 may be an integrated member.

The first energy absorption portion 51 is a member having a rectangular tube shape, and extends linearly in the vehicle front-rear direction. The first energy absorption portion 51 extends from the front side member portion 13 of the front portion framework 10 forward in the vehicle front-rear direction. That is, a rear end portion of the first energy absorption portion 51 is connected to the front end portion of the front side member portion 13 of the front portion framework 10. Further, a front end portion of the first energy absorption portion 51 is connected to the rear surface of the bumper reinforcement 30 (in detail, the inclined portion 32). As illustrated in FIG. 5, the front end portion of the first energy absorption portion 51 is inclined along the rear surface of the inclined portion 32 so as to be positioned rearward as extending outward in the vehicle width direction. The first energy absorption portion 51 is deformed to absorb the load input to the vehicle 100.

The first energy absorption portion 51 is a member having a rectangular tube shape. As illustrated in FIG. 4 and FIG. 5, the first energy absorption portion 51 includes an upper surface 51A that is a flat surface, an inner side surface 51B that may bend from an inner end of the upper surface 51A in the vehicle width direction to extend downward, an outer side surface 51C that may bend from an outer end of the upper surface 51A in the vehicle width direction to extend downward, and a lower surface (not shown) that connects a lower end of the inner side surface 51B and a lower end of the outer side surface 51C to each other. An inner end portion of the second energy absorption portion 52 in the vehicle width direction is connected to the outer side surface 51C. In detail, the inner end portion of the second energy absorption portion 52 in the vehicle width direction is connected to a front portion of the outer side surface 51C.

The second energy absorption portion 52 is a member having a rectangular tube shape, and linearly extends along the vehicle width direction. The inner end portion of the second energy absorption portion 52 in the vehicle width direction is connected to the front portion of the outer side surface 51C of the first energy absorption portion 51. A front end portion of the second energy absorption portion 52 is connected to the rear surface of the bumper reinforcement 30 (in detail, the inclined portion 32). As illustrated in FIG. 5, the front end portion of the second energy absorption portion 52 is inclined along the rear surface of the inclined portion 32 so as to be positioned rearward as extending outward in the vehicle width direction. The second energy absorption portion 52 is deformed to absorb the load input to the vehicle 100.

The second energy absorption portion 52 is a member having a rectangular tube shape. As illustrated in FIG. 4 and FIG. 5, the second energy absorption portion 52 includes an upper surface 52A that is a flat surface, an inner side surface 52B that may bend from an inner end of the upper surface 52A in the vehicle width direction to extend downward, an outer side surface 52C that may bend from an outer end of the upper surface 52A in the vehicle width direction to extend downward, and a lower surface (not shown) that connects a lower end of the inner side surface 52B and a lower end of the outer side surface 52C to each other. A front end portion of an outrigger (connecting member) 60 is connected to the outer side surface 52C. In detail, the front end portion of the outrigger 60 is connected to a rear portion of the outer side surface 52C.

An outer end portion of the second energy absorption portion 52 in the vehicle width direction is positioned inward of an outer end portion of the bumper reinforcement 30 in the vehicle width direction.

### Outrigger 60

The outrigger 60 is provided above the front side member portion 13 of the front portion framework 10. The outrigger 60 is provided outward of the front side member portion 13 of the front portion framework 10 in the vehicle width direction.

The outrigger 60 connects the front portion framework 10 and the crash box 50. In detail, the outrigger 60 connects the front end portion of the apron member portion 14 of the front portion framework 10 and the outer side surface 52C of the second energy absorption portion 52 of the crash box 50. The rear end portion of the outrigger 60 is connected to the front end portion of the apron member portion 14 of the front portion framework 10. The front end portion of the outrigger 60 is connected to the outer side surface 52C of the second energy absorption portion 52 of the crash box 50.

As illustrated in FIG. 5, the second energy absorption portion 52 is provided forward of the apron member portion 14 in the vehicle front-rear direction and inward of the apron member portion 14 in the vehicle width direction. Accordingly, the outrigger 60 extends forward and inward from the apron member portion 14. Further, the second energy absorption portion 52 is positioned below the apron member portion 14. Accordingly, the outrigger 60 extends downward from the apron member portion 14.

As illustrated in FIG. 4 and FIG. 5, the outrigger 60 is an elongated member extending substantially linear. The outrigger 60 includes a recessed portion (a bending portion) 61 recessed inward from its outer side surface in the vehicle width direction. The recessed portion 61 is provided at a substantially middle portion in the vehicle front-rear direction. The recessed portion 61 is shorter in length in the vehicle width direction (in other words, thickness) than other parts of the outrigger 60. Accordingly, the recessed portion 61 is easily deformed in the vehicle width direction (the intersecting direction). In detail, the recessed portion 61 is easily bent in the inner direction in the vehicle width direction. With the recessed portion 61 being provided, the outrigger 60 is easily bent in the inner direction in the vehicle width direction.

As described above, the rear end portion of the outrigger 60 is connected to the apron member portion 14, and the front end portion of the outrigger 60 is connected to the second energy absorption portion 52. In the present embodiment, the rear end portion of the outrigger 60 is fastened and fixed to the apron member portion 14 by a plurality of (in the present embodiment, as an example, two) fastening tools 62. Further, the front end portion of the outrigger 60 is fastened and fixed to the second energy absorption portion 52 by a plurality of (in the present embodiment, as an example, two) fastening tools 63.

In the present embodiment, the connection strength of a connection part between the outrigger 60 and the second energy absorption portion 52 is lower than the connection strength of a connection part between the outrigger 60 and the apron member portion 14. That is, the connection part between the outrigger 60 and the second energy absorption portion 52 is more easily disconnected than the connection part between the outrigger 60 and the apron member portion 14.

It is to be noted that a method of changing the connection strength is similar to that in the above-mentioned first embodiment, and hence detailed description thereof is omitted.

### Actions and Effects

Also in the present embodiment, similarly to the above-mentioned first embodiment, with the outrigger 60, it is possible to improve the support rigidity of the crash box 50 and the bumper reinforcement 30. Thus, it is possible to reduce damage of the front portion framework 10 for which repair is complicated.

Further, in the present embodiment, the outrigger 60 is connected to the second energy absorption portion 52 of the crash box 50. This makes it possible to bring the position of the connection part between the outrigger 60 and the second energy absorption portion 52 in the vehicle width direction to a desired position by, for example, adjusting the length of the second energy absorption portion 52 to increase the length in the vehicle width direction.

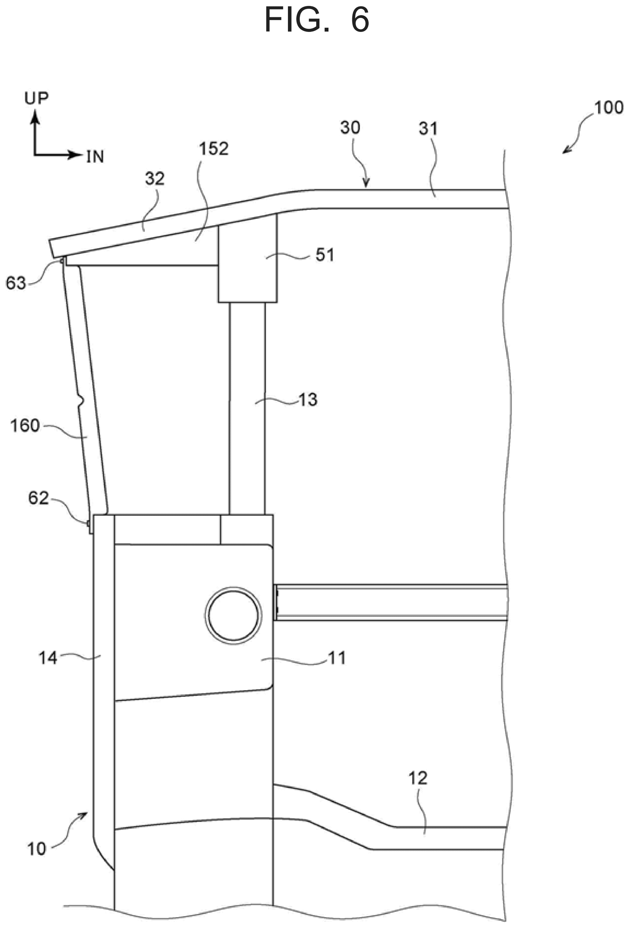

Thus, for example, as in a modification example of the present embodiment illustrated in FIG. 6, a second energy absorption portion 152 having a long length in the vehicle width direction can be provided. This makes it possible to bring a position of a connection part between an outrigger 160 and the second energy absorption portion 152 in the vehicle width direction outward of the front side member portion 13 in the vehicle width direction. Thus, for example, it is possible for the outrigger 160 to suitably receive a collision load even in a vehicle having a long length in the vehicle width direction.

Further, in the present embodiment, the second energy absorption portion 52 is connected to an outer surface of the front end portion of the first energy absorption portion 51 in the vehicle width direction. This makes it possible to bring the position of the second energy absorption portion 52 forward in the vehicle front-rear direction. Thus, it is possible to increase the length of the outrigger 60 connected to the second energy absorption portion 52. As a result, it is possible to increase energy to be absorbed by the outrigger 60.

The vehicle front portion structures according to the embodiments have been described above, but the present disclosure can be changed in design as appropriate without departing from the gist of the present disclosure.

For example, in the above-mentioned embodiments, an example in which the recessed portion is provided in the outrigger such that the outrigger 40 is easily bent inward in the vehicle width direction has been described, but the present disclosure is not limited thereto. The configuration for easily bending the outrigger inward in the vehicle width direction may be configurations other than the recessed portion. For example, a curved portion that curves inward in the vehicle width direction may be provided in the outrigger such that the outrigger is easily bent inward in the vehicle width direction.

Further, in the above-mentioned second embodiment, an example in which the front end portion of the outrigger 60 is connected to the outer side surface 52C of the second energy absorption portion 52 of the crash box 50 has been described, but the present disclosure is not limited thereto. For example, the front end portion of the outrigger 60 may be connected to the upper surface 52A of the second energy absorption portion 52 of the crash box 50.

## Claims

1. A vehicle front portion structure comprising:
a front portion framework (10) that is integrally molded, the front portion framework (10) including a front side member portion (13) extending along a vehicle front-rear direction and an apron member portion (14) provided above the front side member portion (13) in a vehicle-height direction;
a crash box (20) provided forward of the front side member portion (13) in the vehicle front-rear direction;
a bumper reinforcement (30) connected to a front end of the crash box (20), the bumper reinforcement (30) extending in a vehicle width direction; and
a connecting member (40) that connects the apron member portion (14) and the crash box (20).

2. The vehicle front portion structure according to claim 1, wherein:
the crash box (20) includes a first energy absorption portion extending from the front side member portion (13) to a vehicle front side, and a second energy absorption portion provided forward of the first energy absorption portion in the vehicle front-rear direction, the second energy absorption portion being lower in strength than the first energy absorption portion; and
the connecting member (40) is connected to the first energy absorption portion.

3. The vehicle front portion structure according to claim 2, wherein the connecting member (40) is connected to an outer side surface of the first energy absorption portion in the vehicle width direction.

4. The vehicle front portion structure according to claim 2, wherein the connecting member (40) is connected to an upper surface of the first energy absorption portion.

5. The vehicle front portion structure according to claim 1, wherein:
the crash box (20) includes a first energy absorption portion extending from the front side member portion (13) to a vehicle front side, and a second energy absorption portion provided outward of the first energy absorption portion in the vehicle width direction; and
the connecting member (40) is connected to the second energy absorption portion.

6. The vehicle front portion structure according to claim 5, wherein the second energy absorption portion is connected to an outer surface of a front end portion of the first energy absorption portion in the vehicle width direction.

7. The vehicle front portion structure according to any one of claims 1 to 6, wherein a connection part between the crash box (20) and the connecting member (40) is lower in connection strength than a connection part between the apron member portion (14) and the connecting member (40).

8. The vehicle front portion structure according to any one of claims 1 to 7, wherein the connecting member (40) includes a bending portion that is easily bent in an intersecting direction that is a direction intersecting with the vehicle front-rear direction.
